# EUROPEAN PATENT APPLICATION

(11) **EP 4 800 540 A1**
(43) Date of publication of application: **02.09.2026**
(21) Application number: 25225996.5
(22) Date of filing: 19.12.2025
(51) Int. Cl.: G06F 7/58, G09C 1/00, H04L 9/08

(54) **PHYSICALLY UNCLONABLE FUNCTION DEVICE AND CRYPTOGRAPHIC KEY GENERATION APPARATUS USING THE SAME**

(30) Priority: 28.02.2025 KR 20250026634; 14.05.2025 KR 20250062448
(71) Applicant: Korea University Research and Business Foundation, Seoul 02841 (KR)
(72) Inventor: KIM, Young Keun, 06009 Seoul (KR); KIM, Ye Eun, 07663 Seoul (KR); LEE, Jeong Kyu, 04145 Seoul (KR)
(74) Representative: Prüfer & Partner mbB Patentanwälte · Rechtsanwälte

(57) **Abstract**

Disclosed are a physically unclonable function device and a cryptographic key generation apparatus using the same. More particularly, a physically unclonable function device according to an embodiment of the present disclosure includes a spin-torque generating layer; a magnetic free layer; a tunnel barrier layer; a spacer layer; and an indirect exchange interaction layer, wherein the spin-torque generating layer generates a Spin-Orbit Torque (SOT) when a current flows in an in-plane direction, the magnetic free layer has Perpendicular Magnetic Anisotropy (PMA), and the indirect exchange interaction layer includes a first magnetic layer, a non-magnetic intermediate layer, and a second magnetic layer, wherein a magnetization direction between the first magnetic layer and the second magnetic layer is determined to be a parallel or antiparallel state according to the thickness of the non-magnetic intermediate layer, and when the magnetization direction of the indirect exchange interaction layer is the antiparallel state, stray magnetic fields of the first and second magnetic layers cancel each other out so that switching of the magnetic free layer does not occur, and when the magnetization direction of the indirect exchange interaction layer is the parallel state, the stray magnetic fields reinforce each other so that switching of the magnetic free layer occurs.

## Description

### CROSS-REFERENCE TO RELATED APPLICATIONS

This application claims the priority benefit of Korean Patent Application No. 10-2025-0026634, filed on February 28, 2025, and Korean Patent Application No. 10-2025-0062448, filed on May 14, 2025, in the Korean Intellectual Property Office, the disclosure of each of which is incorporated herein by reference.

### BACKGROUND OF THE DISCLOSURE

### Field of the Disclosure

The present disclosure relates to a physically unclonable function device and a cryptographic key generation apparatus using the same, and more particularly, to a technology for implementing a physically unclonable function device configured to generate a unique cryptographic key through a random indirect exchange interaction caused by uncontrollable process variability in devices where Perpendicular Magnetic Anisotropy (PMA) is maintained and Spin-Orbit Torque (SOT) switching is possible, and a cryptographic key generation apparatus using the physically unclonable function device.

### Description of the Related Art

A heterojunction, which is a core element of Magnetoresistive Random-Access Memory (MRAM) based on Spin-Orbit Torque (SOT) switching, is composed of a non-magnetic spin-torque generating layer (hereinafter, spin-torque layer), a magnetic layer (magnetic free layer, hereinafter, free layer), and a tunnel barrier layer.

A Magnetic Tunnel Junction (MTJ) is composed of a spin-torque layer, a magnetic free layer, a tunnel barrier layer, and a second magnetic layer (magnetic fixed layer, hereinafter, fixed layer).

Information is stored by using the Tunneling MagnetoResistance (TMR) phenomenon, in which the electrical resistance value of a tunneling current passing through an insulating layer changes according to the relative magnetization direction of the free layer and the fixed layer.

Recently, the SOT phenomenon, which induces the switching of a free layer by using the spin Hall effect or Rashba effect that occurs when a current flows in a direction parallel to an in-plane of a spin-torque layer adjacent to the free layer, has been discovered, and it is receiving attention as a technology by which information can be recorded at a higher speed and with lower current consumption than the existing Spin-Transfer Torque (STT) writing method.

Recently, innovative data technologies such as artificial intelligence and the Internet of Things (IoT) have been developing.

Consequently, the amount of data being processed is increasing exponentially, and as personal information is frequently used in data, the importance of security is increasing.

Existing software-based cryptographic systems are vulnerable to external attacks and have the risk of being replicable.

Recently, as a hardware-based security system that can replace this, the Physically Unclonable Function (PUF), has attracted attention.

For a PUF to operate efficiently, three performance indicators should be satisfied.

Entropy is an indicator of whether the output value (response) exhibited by the PUF appears random.

Uniqueness is an indicator of whether the PUF has different output patterns for different devices.

Reliability is an indicator of whether the PUF has a unique output value for a specific input value (challenge).

Therefore, there is a need to secure a method for implementing a PUF that satisfies all the conditions of entropy, uniqueness, and reliability by utilizing SOT in a zero-magnetic-field environment.

### [Related Art Documents]

### [Patent Documents]

Korean Patent No. 10-2396525
Korean Patent No. 10-2746798

### [Non-patent Document]

IEEE Magnetics Letters 12, 4500305 (2021)

### SUMMARY OF THE DISCLOSURE

Therefore, the present disclosure uses a cryptographic key implemented with devices based on Spin-Orbit Torque (SOT), and it is an object of the present disclosure to implement a physically unclonable function device configured to generate a unique cryptographic key through a random indirect exchange interaction caused by uncontrollable process variability in devices where Perpendicular Magnetic Anisotropy (PMA) is maintained and Spin-Orbit Torque (SOT) switching is possible, and a cryptographic key generation apparatus using the physically unclonable function device.

It is another object of the present disclosure to implement a cryptographic key generation apparatus configured to generate a unique cryptographic key through a random indirect exchange interaction, as a magnetization direction between a first magnetic layer and a second magnetic layer is determined to be a parallel state or an antiparallel state according to the thickness of a non-magnetic intermediate layer constituting an indirect exchange interaction layer.

It is yet another object of the present disclosure to implement a Physically Unclonable Function (PUF) that satisfies all conditions of entropy, uniqueness, and reliability, where an output value (response) exhibited by the PUF appears randomly, the PUF has different output patterns for different devices, and the PUF has a unique output value for a specific input value (challenge).

In accordance with an aspect of the present disclosure, the above and other objects can be accomplished by the provision of a physically unclonable function device, including: a spin-torque generating layer; a magnetic free layer; a tunnel barrier layer; a spacer layer; and an indirect exchange interaction layer, wherein the spin-torque generating layer generates a Spin-Orbit Torque (SOT) when a current flows in an in-plane direction, the magnetic free layer has Perpendicular Magnetic Anisotropy (PMA), and the indirect exchange interaction layer includes a first magnetic layer, a non-magnetic intermediate layer, and a second magnetic layer, wherein a magnetization direction between the first magnetic layer and the second magnetic layer is determined to be a parallel or antiparallel state according to the thickness of the non-magnetic intermediate layer, and when the magnetization direction of the indirect exchange interaction layer is the antiparallel state, stray magnetic fields of the first and second magnetic layers cancel each other out so that switching of the magnetic free layer does not occur, and when the magnetization direction of the indirect exchange interaction layer is the parallel state, the stray magnetic fields reinforce each other so that switching of the magnetic free layer occurs.

For an input value applied to the spin-torque generating layer, an output value which is determined by a field-free SOT switching characteristic based on switching of the magnetic free layer determined according to the magnetization direction of the indirect exchange interaction layer may be generated.

The indirect exchange interaction layer may have an indirect exchange interaction characteristic due to process variability based on a change in the thickness of the non-magnetic intermediate layer, and randomly determine an output value according to the indirect exchange interaction characteristic.

The non-magnetic intermediate layer may have a thickness of 0.9 nm to 3.2 nm.

The magnetization direction of the indirect exchange interaction layer may be determined to be the antiparallel state when the thickness of the non-magnetic intermediate layer is from 0.9 nm to 1.2 nm, and may be determined to be the parallel state by oscillating from the antiparallel state to the parallel state when the thickness of the non-magnetic intermediate layer increases from 1.3 nm to 1.8 nm.

The magnetization direction of the indirect exchange interaction layer may be determined to be the antiparallel state by oscillating from the parallel state to the antiparallel state when the thickness of the non-magnetic intermediate layer is from 1.9 nm to 2.3 nm, and may be determined to be the parallel state by oscillating from the antiparallel state to the parallel state when it is from 2.6 nm to 3.2 nm.

The magnetization direction of the indirect exchange interaction layer may be determined by Ruderman-Kittel-Kasuya-Yosida (RKKY) interaction between the first magnetic layer and the second magnetic layer.

The first magnetic layer and the second magnetic layer may be formed of CoFeB, and the non-magnetic intermediate layer may be formed of Ru.

In accordance with another aspect of the present disclosure, there is provided a cryptographic key generation apparatus, including: an array in which a plurality of physically unclonable function devices are arranged, wherein one of the plural physically unclonable function devices includes a spin-torque generating layer; a magnetic free layer; a tunnel barrier layer; a spacer layer; and an indirect exchange interaction layer, wherein the spin-torque generating layer generates a Spin-Orbit Torque (SOT) when a current flows in an in-plane direction, the magnetic free layer has Perpendicular Magnetic Anisotropy (PMA), and the indirect exchange interaction layer includes a first magnetic layer, a non-magnetic intermediate layer, and a second magnetic layer, wherein a magnetization direction between the first magnetic layer and the second magnetic layer is determined to be a parallel or antiparallel state according to the thickness of the non-magnetic intermediate layer, and when the magnetization direction of the indirect exchange interaction layer is the antiparallel state, stray magnetic fields of the first and second magnetic layers cancel each other out so that switching of the magnetic free layer does not occur, and when the magnetization direction of the indirect exchange interaction layer is the parallel state, the stray magnetic fields reinforce each other so that switching of the magnetic free layer occurs, and a cryptographic key is generated according to random output values based on different indirect exchange interaction characteristics due to process variability based on a change in a thickness of the non-magnetic intermediate layer in the array.

One of the plural physically unclonable function devices may have an indirect exchange interaction characteristic due to process variability based on a change in a thickness of the non-magnetic intermediate layer in the indirect exchange interaction layer, and, for an input value, may generate an output value randomly determined according to the indirect exchange interaction characteristic.

One of the plural physically unclonable function devices may perform switching by the generated SOT without an external magnetic field.

In the array where the plural physically unclonable function devices are arranged, the plural physically unclonable function devices may be arranged in preset rows and columns, such that for each of the plurality of physically unclonable function devices, a field-free SOT characteristic is determined as a parallel or antiparallel state is determined according to a random indirect exchange interaction, an output value is output as the field-free SOT characteristic, and a cryptographic key is generated using the outputted output value.

### BRIEF DESCRIPTION OF THE DRAWINGS

The above and other objects, features and other advantages of the present disclosure will be more clearly understood from the following detailed description taken in conjunction with the accompanying drawings, in which:
FIGS. 1 and 2 illustrate a physically unclonable function device according to an embodiment of the present disclosure;
FIGS. 3A and 3B illustrate indirect exchange interaction characteristics dependent upon the thickness of a non-magnetic intermediate layer in the physically unclonable function device according to an embodiment of the present disclosure;
FIGS. 4A and 4B illustrate a field-free Spin-Orbit Torque (SOT) switching characteristic according to an indirect exchange interaction characteristic in the physically unclonable function device according to an embodiment of the present disclosure;
FIGS. 5A to 5C illustrate cryptographic key generation based on a field-free SOT switching characteristic of a cryptographic key generation apparatus composed of a plurality of physically unclonable function devices according to an embodiment of the present disclosure;
FIGS. 6A to 6J illustrate the main characteristics of the plural physically unclonable function devices according to an embodiment of the present disclosure;
FIGS. 7A to 7C are diagrams for explaining reliability and endurance characteristics by temperature of the physically unclonable function device according to an embodiment of the present disclosure;
FIGS. 8A and 8B are diagrams for explaining the schematic of a two-state RKKY interaction that oscillates between parallel and antiparallel coupling according to the thickness of the non-magnetic intermediate layer, and a field-free SOT switching characteristic according to an RKKY interaction characteristic, according to an embodiment of the present disclosure;
FIGS. 9A and 9B illustrate an exchange field (Hₑₓ) as a function related to the thickness of the non-magnetic intermediate layer according to an embodiment of the present disclosure;
FIG. 10 illustrates the magnetic properties of the physically unclonable function device according to an embodiment of the present disclosure;
FIG. 11 is a diagram for explaining field-free spin-orbit torque switching due to the stray magnetic field of a magnetic layer with in-plane magnetic anisotropy in the physically unclonable function device according to an embodiment of the present disclosure;
FIG. 12 is a diagram for explaining an anomalous Hall resistance according to the thickness of the non-magnetic intermediate layer in the physically unclonable function device according to an embodiment of the present disclosure;
FIG. 13 is a diagram for explaining a field-free switching measurement result when the size of the physically unclonable function device according to an embodiment of the present disclosure is reduced;
FIG. 14 is a diagram illustrating a microstructural analysis of the physically unclonable function device according to an embodiment of the present disclosure;
FIG. 15 is a diagram illustrating an anomalous Hall resistance measurement of a 16-bit RKKY spintronic Physically Unclonable Function (PUF) related to the physically unclonable function device according to an embodiment of the present disclosure;
FIG. 16 is a diagram for explaining an in-plane magnetic anisotropy of an RKKY layer related to the physically unclonable function device according to an embodiment of the present disclosure; and
FIG. 17 is a diagram for explaining the SOT switching characteristics of a plurality of physically unclonable function devices at various operating temperatures according to an embodiment of the present disclosure.

### DETAILED DESCRIPTION OF THE DISCLOSURE

The embodiments will be described in detail herein with reference to the drawings.

The embodiments and the terms used herein are not intended to limit the disclosed technology to specific implementations described in this document, but should be understood to include various modifications, equivalents, and/or alternatives thereof.

In the following description of the present disclosure, a detailed description of known functions and configurations incorporated herein will be omitted when it may make the subject matter of the present disclosure unclear.

The terms used in the specification are defined in consideration of functions used in the present disclosure, and can be changed according to the intent or conventionally used methods of clients, operators, and users. Accordingly, definitions of the terms should be understood on the basis of the entire description of the present specification.

In description of the drawings, like reference numerals may be used for similar elements.

The singular expressions in the present specification may encompass plural expressions unless clearly specified otherwise in context.

In this specification, expressions such as "A or B" and "at least one of A and/or B" may include all possible combinations of the items listed together.

Expressions such as "first" and "second" may be used to qualify the elements irrespective of order or importance, and are used to distinguish one element from another and do not limit the elements.

It will be understood that when an element (e.g., first) is referred to as being "connected to" or "coupled to" another element (e.g., second), it may be directly connected or coupled to the other element or an intervening element (e.g., third) may be present.

As used herein, "configured to" may be used interchangeably with, for example, "suitable for", "ability to", "changed to", "made to", "capable of", or "designed to" in terms of hardware or software.

In some situations, the expression "device configured to" may mean that the device "may do ~" with other devices or components.

For example, in the sentence "processor configured to perform A, B, and C", the processor may refer to a general purpose processor (e.g., CPU or application processor) capable of performing corresponding operation by running a dedicated processor (e.g., embedded processor) for performing the corresponding operation, or one or more software programs stored in a memory device.

In addition, the expression "or" means "inclusive or" rather than "exclusive or".

That is, unless otherwise mentioned or clearly inferred from context, the expression "x uses a or b" means any one of natural inclusive permutations.

Terms, such as "unit" or "module", etc., should be understood as a unit that processes at least one function or operation and that may be embodied in a hardware manner, a software manner, or a combination of the hardware manner and the software manner.

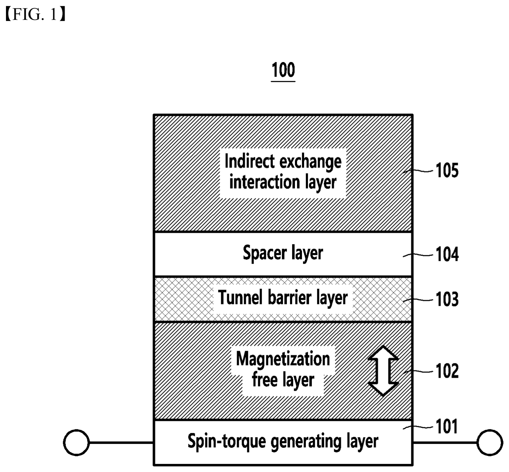

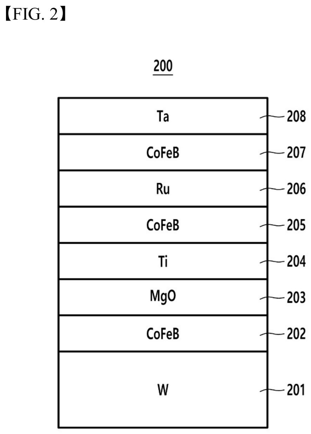

FIGS. 1 and 2 illustrate a physically unclonable function device according to an embodiment of the present disclosure.

According to an embodiment of the present disclosure, a physically unclonable function device 100 includes a spin-torque generating layer 101, a magnetic free layer 102, a tunnel barrier layer 103, a spacer layer 104 and an indirect exchange interaction layer 105.

For example, the spin-torque generating layer 101 generates Spin-Orbit Torque (SOT) when a current flows in an in-plane direction.

The magnetic free layer 102 has Perpendicular Magnetic Anisotropy (PMA).

The indirect exchange interaction layer 105 includes a first magnetic layer, a non-magnetic intermediate layer and a second magnetic layer.

In the indirect exchange interaction layer 105, a magnetization direction between the first magnetic layer and the second magnetic layer is determined to be a parallel state or an antiparallel state according to the thickness of the non-magnetic intermediate layer.

In the indirect exchange interaction layer 105, when the magnetization direction of the indirect exchange interaction layer 105 is in an antiparallel state, the stray magnetic fields of the first magnetic layer and the second magnetic layer cancel each other out, so that switching of the magnetic free layer does not occur.

In the indirect exchange interaction layer 105, when the magnetization direction of the indirect exchange interaction layer 105 is in a parallel state, the stray magnetic fields reinforce each other, so that switching of the magnetic free layer 102 may occur.

For an input value applied to the spin-torque generating layer 101, the indirect exchange interaction layer 105 may generate an output value determined by a field-free SOT switching characteristic that depends on whether the magnetic free layer 102 switches according to the magnetization direction of the indirect exchange interaction layer.

The indirect exchange interaction layer 105 has an indirect exchange interaction characteristic due to process variability based on a change in the thickness of the non-magnetic intermediate layer, and may randomly determine an output value according to the indirect exchange interaction characteristic.

The thickness of the non-magnetic intermediate layer may be from 0.9 nm to 3.2 nm.

The magnetization direction of the indirect exchange interaction layer 105 may be determined to be an antiparallel state when the thickness of the non-magnetic intermediate layer is from 0.9 nm to 1.2 nm, and may be determined to be a parallel state by oscillating from the antiparallel state to the parallel state when the thickness of the non-magnetic intermediate layer increases from 1.3 nm to 1.8 nm.

The magnetization direction of the indirect exchange interaction layer 105 is determined to be an antiparallel state by oscillating from the parallel state to the antiparallel state when the thickness of the non-magnetic intermediate layer is from 1.9 nm to 2.3 nm, and may be determined to be a parallel state by oscillating from the antiparallel state to the parallel state when it is from 2.6 nm to 3.2 nm.

In the indirect exchange interaction layer 105, the magnetization direction may be determined by the Ruderman-Kittel-Kasuya-Yosida (RKKY) interaction between the first magnetic layer and the second magnetic layer.

In the indirect exchange interaction layer 105, the first magnetic layer and the second magnetic layer may be formed of CoFeB, and the non-magnetic intermediate layer may be formed of Ru.

Therefore, the present disclosure relates to using a cryptographic key implemented with devices based on Spin-Orbit Torque (SOT), and the present disclosure may implement a physically unclonable function device configured to generate a unique cryptographic key through a random indirect exchange interaction caused by uncontrollable process variability in devices where Perpendicular Magnetic Anisotropy (PMA) is maintained and Spin-Orbit Torque (SOT) switching is possible, and a cryptographic key generation apparatus using the physically unclonable function device.

Referring to FIG. 2, the structure of a physically unclonable function device according to an embodiment of the present disclosure 200 includes W 201, CoFeB 202, MgO 203, Ti 204, CoFeB 205, Ru 206, CoFeB 207, and Ta 208.

The thickness of each component of the structure of the physically unclonable function device according to an embodiment of the present disclosure 200 may be: W is 5 nm, CoFeB is 0.9 nm, MgO is 1 nm, Ti is 2 nm, CoFeB is 2 nm, Ru is t nm, CoFeB is 2.5 nm, and Ta is 2 nm. Here, t is a real number greater than 0.

The thickness of Ru 206 is from 0.9 nm to 3.2 nm. Here, Si means a substrate, and the SiO₂ layer is a natural oxide layer formed on the substrate and is amorphous.

The W layer 201 may be a spin-torque layer, the CoFeB layer 202 may be a magnetic free layer, and the composition of a sputtering target may be Co₄₀Fe₄₀B₂₀ (at%).

The Ti layer 204 may be a spacer layer, the CoFeB/Ru/CoFeB layer may be an indirect exchange interaction layer, and the Ta layer 208 may be a capping layer.

After thin film deposition, heat treatment is performed at 300 °C for 1 hour. Initial vacuum during the heat treatment is in a 10⁻⁶ Torr range, and an external magnetic field of 6 kOe may be applied in a direction parallel to the thin film during the heat treatment.

After performing the heat treatment at 300 °C, a 16-bit device may be fabricated by a photolithography process for cryptographic key generation.

The device has a Hall bar shape having a width of 5 µm and a length of 75 µm, and a rectangular bar of 5x25 µm² in the center may be etched down to the W layer 201 to prevent current injection into the indirect exchange interaction layer.

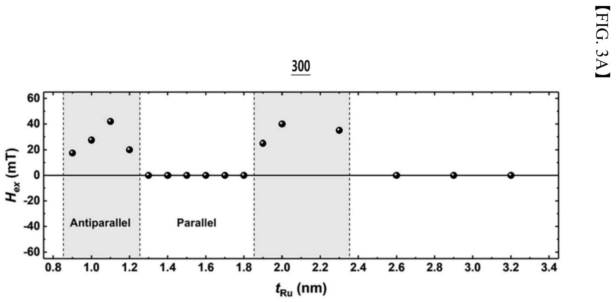

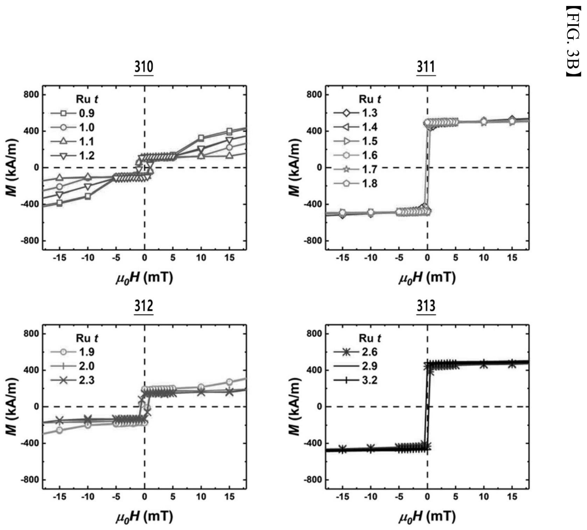

FIGS. 3A and 3B illustrate indirect exchange interaction characteristics dependent upon the thickness of the non-magnetic intermediate layer in the physically unclonable function device according to an embodiment of the present disclosure.

FIGS. 3A and 3B show indirect exchange interaction characteristics according to a Ru thickness, which corresponds to the non-magnetic intermediate layer, when the physically unclonable function device according to an embodiment of the present disclosure is composed of a W/CoFeB/MgO/Ti/CoFeB/Ru/CoFeB/Ta structure.

Referring to FIG. 3A, a graph 300 shows the indirect exchange interaction characteristics dependent upon the Ru thickness.

When the Ru thickness is from 0.9 to 1.2 nm, the two magnetic layers of the indirect exchange interaction layer, which are CoFeB layers, are in an antiparallel state, and as the Ru thickness increases, they oscillate between an antiparallel state and a parallel state, which is the well-known Ruderman-Kittel-Kasuya-Yosida (RKKY) interaction.

The graph 300 shows the result of the RKKY interaction as a magnetic characteristic of the RKKY interaction.

Referring to FIG. 3B, graphs 310 to 313 show the in-plane hysteresis loop magnetic characteristics of the physically unclonable function device, dependent upon a change in the thickness of Ru.

It shows an oscillating RKKY interaction behavior as the thickness of the non-magnetic intermediate layer changes.

The graphs 310 and 312 show an antiparallel direction, and the graphs 311 and 313 show a parallel direction.

The RKKY interaction is an indirect exchange coupling mechanism between magnetic moments in a metal, mediated by conduction electrons.

Through this long-range interaction, magnetic moments may interact at a relatively long distance.

It exhibits an oscillating behavior between ferromagnetic and antiferromagnetic coupling states according to the thickness of the non-magnetic intermediate layer.

This behavior is related to an oscillating characteristic of an exchange field (Hex) in the RKKY interaction that characterizes the exchange interaction between magnetic moments separated by the non-magnetic intermediate layer, and its magnitude indicates the strength of the coupling.

The graph 310 shows that, experimentally, an indirect interaction between two CoFeB layers in a range of 0.9 nm to 1.2 nm generates an antiparallel coupling.

The graph 311 shows that when the thickness of Ru reaches 1.3 nm, the RKKY interaction abruptly switches to a parallel coupling.

In the graph 312 and the graph 313, as the Ru thickness further increases, an overall oscillating behavior is shown by alternating between antiparallel coupling and parallel coupling.

In the case of antiparallel coupling, when a sufficiently large magnetic field is applied, the two magnetization directions become parallel.

However, when the magnetic field gradually decreases, an antiparallel alignment occurs due to the RKKY interaction.

Since a thicker CoFeB layer has a higher Zeeman energy due to a larger magnetic moment, a thinner CoFeB layer with a thickness of 2.0 nm is switched first.

An antiferromagnetic exchange field (Hₑₓ) may become the magnetic field when the 2.0-nm CoFeB layer switches first.

Without being limited to the range of the thickness described above, a hysteresis loop may be confirmed in other scale ranges.

A stray magnetic field generated from an in-plane magnetized ferromagnetic layer may induce field-free SOT switching of a nearby perpendicularly magnetized layer.

To construct a spintronic Physically Unclonable Function (PUF) which is the physically unclonable function device according to an embodiment of the present disclosure, a field-free SOT switching operation according to the RKKY interaction may be implemented, and SOT switching may be performed without an external magnetic field.

Therefore, the present disclosure may implement a cryptographic key generation apparatus that generates a unique cryptographic key through a random indirect exchange interaction, as the magnetization direction between the first magnetic layer and the second magnetic layer is determined to be a parallel state or an antiparallel state according to the thickness of the non-magnetic intermediate layer constituting an indirect exchange interaction layer.

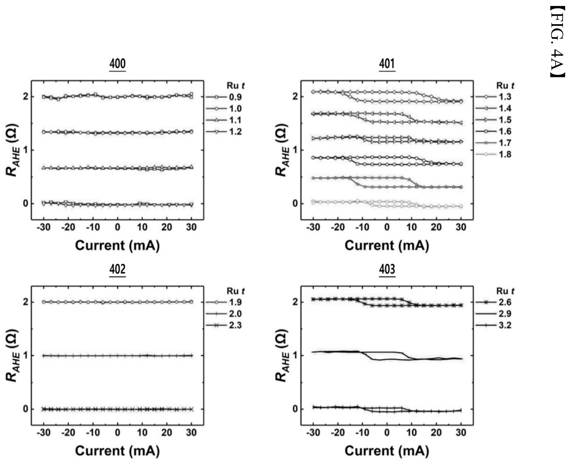

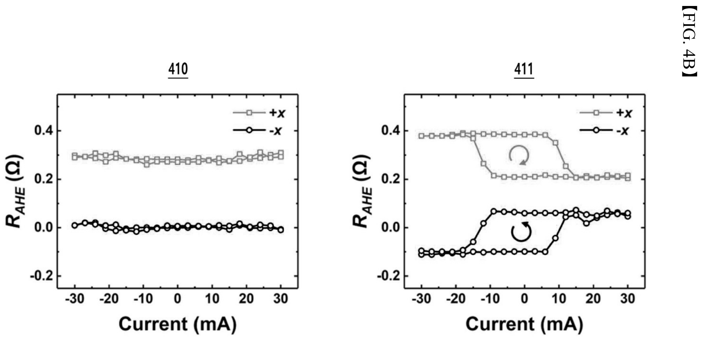

FIGS. 4A and 4B illustrate a field-free SOT switching characteristic according to an indirect exchange interaction characteristic in the physically unclonable function device according to an embodiment of the present disclosure.

FIG. 4A illustrates a field-free SOT characteristic according to the indirect exchange interaction characteristic. According to graphs 400 and 402, when in an antiparallel state, stray magnetic fields of the two magnetic layers, which are CoFeB layers, of the indirect exchange interaction layer cancel each other out, so that the magnetic free layer is not switched.

In contrast, when in a parallel state according to a graph 401 and a graph 403, the stray magnetic fields reinforce each other, so that the magnetic free layer is switched.

It shows that this characteristic is maintained for the two initial states of the indirect exchange interaction.

It shows a field-free SOT switching operation according to the RKKY interaction to construct a spintronic PUF.

For these measurements, it shows that a cross-shaped Hall bar is fabricated, and SOT switching is performed without an external magnetic field.

FIG. 4B shows a field-free SOT switching behavior for a heterostructure composed of various Ru thicknesses for the non-magnetic intermediate layer in the physically unclonable function device according to an embodiment of the present disclosure.

Referring to graphs 410 and 411 of FIG. 4b, before a field-free switching measurement, an external field Hₓ was applied along an x-axis to initialize a magnetization direction of an in-plane magnetized RKKY layer parallel to the current direction, and an initialization field followed a +x direction.

It may be confirmed that switching results are classified into two operations according to the type of the RKKY interaction to generate a binary digital output.

A parallel-coupled sample may deterministically switch the magnetization of a bottommost perpendicularly magnetized CoFeB layer in a zero magnetic field.

This suggests that a total stray magnetic field emitted from two parallel-coupled ferromagnetic layers provides an effective in-plane magnetic field strong enough to break symmetry, leading to deterministic SOT switching.

The same result is shown when using a single in-plane magnetized ferromagnetic layer instead of the RKKY interaction layer.

Unlike the parallel-coupled sample, an antiparallelantiparallel-coupled sample may not deterministically perform field-free switching of a perpendicularly magnetized CoFeB layer because the total stray magnetic field emitted is at a negligible level.

This suggests that the RKKY layer of the antiparallel coupling does not provide a sufficient effective in-plane magnetic field required for the field-free SOT switching.

The bottommost CoFeB layer maintains a perpendicular magnetic anisotropy characteristic at all Ru spacer thicknesses, which excludes the possibility that a specific RKKY interaction interferes with the perpendicular magnetic anisotropy characteristic and hinders field-free SOT switching.

+x and -x respectively indicate that an external magnetic field Hx was applied along +x and -x directions before the field-free switching measurement.

The antiparallel coupling device may not deterministically switch the perpendicularly magnetized CoFeB layer without an external magnetic field, regardless of the direction of an external magnetic field applied in advance.

This is because two opposing magnetic moments in the RKKY interaction layer effectively cancel each other out, regardless of two possible parallel configurations depending upon the direction of the magnetic field applied in advance.

However, in the case of a parallel-coupled device, a switching polarity changes according to the direction of a magnetic field applied before the field-free switching measurement.

This shows that this is because the direction of the stray magnetic field is opposite in two possible parallel coupling RKKY interaction configurations.

The switching operation is maintained regardless of the direction of the external magnetic field applied before the field-free switching measurement.

This shows that the system returns to an initial RKKY interaction state of parallel or antiparallel coupling even if a temporary magnetic modulation occurs depending on a structure.

It is not critical that the switching polarity of the parallel coupling unit device changes according to the magnetic field applied before the field-free switching measurement, because a cryptographic key is determined according to a switching capability.

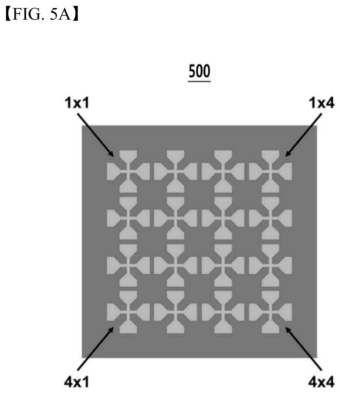

FIGS. 5A to 5C illustrate cryptographic key generation based on a field-free SOT switching characteristic of a cryptographic key generation apparatus composed of a plurality of physically unclonable function devices according to an embodiment of the present disclosure.

FIG. 5A illustrates the structure of a cryptographic key generation apparatus composed of a plurality of physically unclonable function devices according to an embodiment of the present disclosure.

Referring to FIG. 5A, a structure 500 is formed by depositing up to an Ru layer, and then non-uniformly etching a part of the Ru layer by ion milling to create an unpredictable Ru thickness at each location, thereby inducing a random indirect exchange interaction characteristic at each location.

The structure 500 is composed of preset rows and columns, and is illustrated with 4 rows and 4 columns, but a setting of the rows and columns may be changed based on a user setting.

Given that the RKKY interaction determines the occurrence of the field-free SOT switching, a probabilistic distribution of a field-free SOT switching operation may be expected by randomizing the RKKY interaction.

After a thin film is deposited up to the Ru layer, a portion of the Ru layer is etched using Ar ion milling to induce a random Ru thickness, and then deposition of the remaining layers is completed.

In addition, it may be confirmed that the entire PUF fabrication process does not degrade the perpendicular magnetic anisotropy characteristic of the bottommost perpendicularly magnetized CoFeB layer.

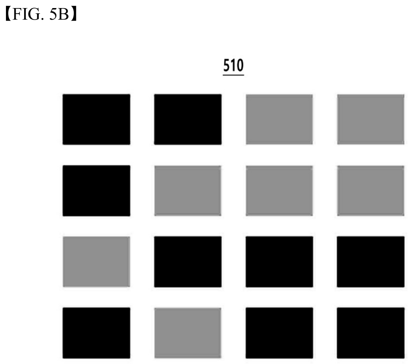

Referring to FIG. 5B, it shows a 16-bit pattern 510 in one device (e.g., PUF1) among a plurality of physically unclonable function devices. Here, the squares of different colors indicate whether field-free SOT switching occurred according to the parallel and antiparallel RKKY interaction of a unit device.

A black color located at row 1 and column 1 indicates a case where field-free SOT switching did not occur due to an antiparallel aligned indirect exchange interaction layer, and a gray color located at row 1 and column 3 indicates a case where field-free SOT switching occurred due to a parallel aligned indirect exchange interaction layer.

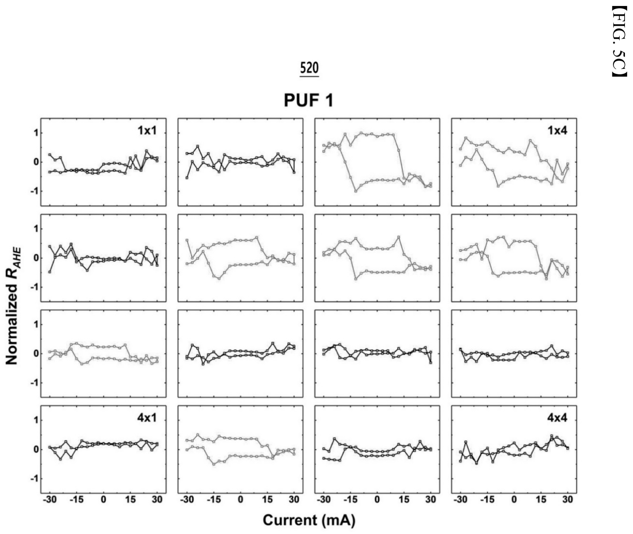

Referring to FIG. 5C, data 520 shows switching measurement values for all unit devices of PUF 1.

In the data 520, parallel (antiparallel) coupled unit devices are indicated in gray (black).

The measurement was performed by sweeping a current between -30 mA and +30 mA and performing a field-free switching measurement after applying an external magnetic field H(x) along a +x direction.

The data 520 shows that unit devices with parallel and antiparallel coupling are randomly distributed with a ratio of 7 to 9.

This ratio is close to the requirement of an ideal PUF, which needs a uniform distribution of a 50:50 ratio.

The data 520 shows that the device exhibits a binary digital output because two separate RKKY parallel and antiparallel coupling interactions enable two different switching operations.

Since an analog PUF requires an analog-to-digital converter that consumes a significant amount of power, a low power consumption of a digital PUF is advantageous compared to the analog PUF.

The data 520 shows that a current sweep does not require an external magnetic field for cryptographic key generation.

Applying a magnetic field in the +x direction prior to the field-free measurement was performed as a precautionary step, but it is not essential because an in-plane magnetic anisotropy of the RKKY layer is along an x-axis, and this anisotropy may be set by applying a magnetic field along the x-axis during heat treatment.

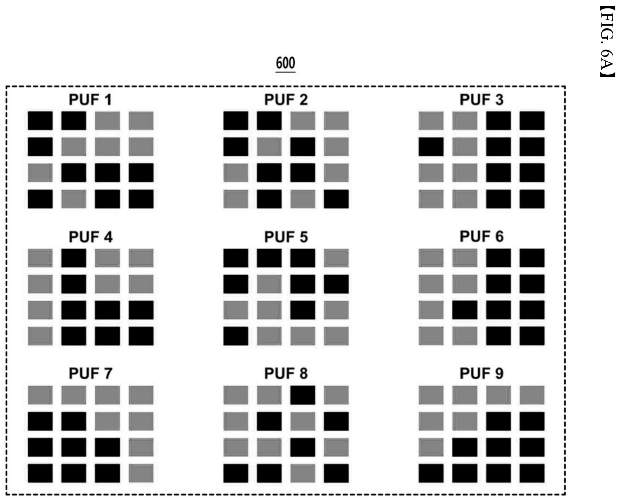

FIGS. 6A to 6J illustrate the main characteristics of the plural physically unclonable function devices according to an embodiment of the present disclosure.

Referring to FIG. 6A, data 600 illustrates output results for 9 PUF devices, each consisting of 16 unit devices representing 16 bits.

It shows an entire layout in which 16 unit devices are arranged in a single PUF device.

It may be seen that the unit devices have the same dimensions as each other and have undergone the same manufacturing process except for non-uniform Ru milling.

The data 600 shows individual 16-bit patterns of the 9 PUF devices.

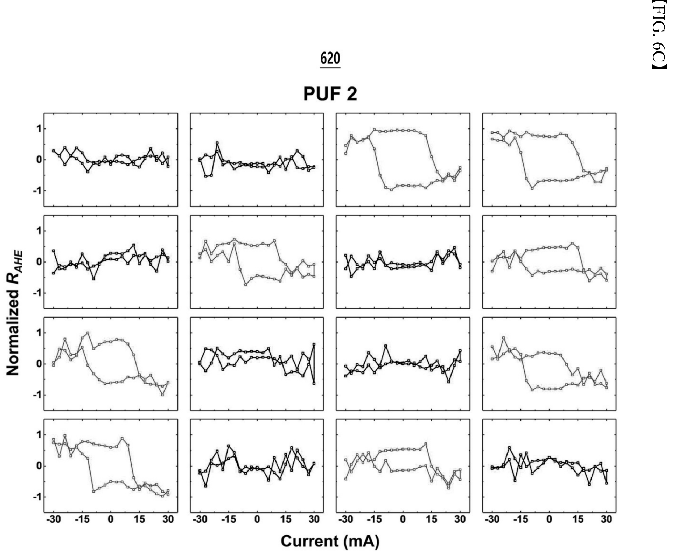

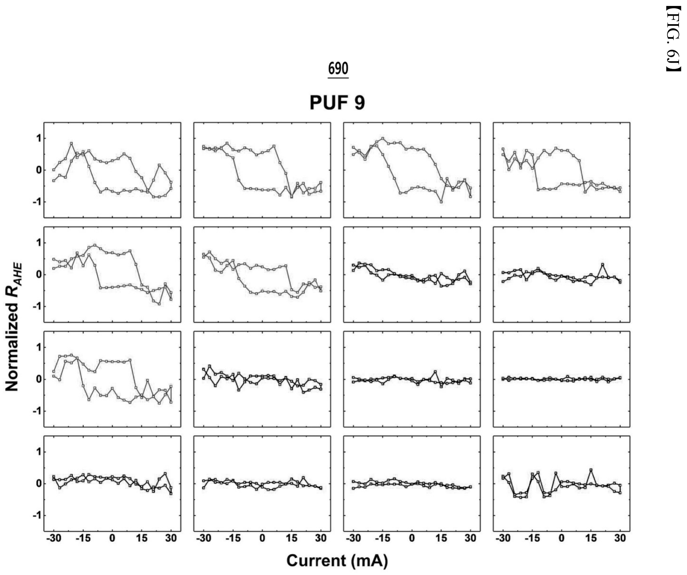

This pattern is unpredictable and unique for each device, and actual switching measurement values of the PUF devices are additionally presented through FIGS. 6C and 6J.

To evaluate a uniformity characteristic, an entropy (E) value of the RKKY spintronic device was calculated, and this calculation is performed using Equation 1. $E = - \left[p {log}_{2}p+\left(1-p\right){log}_{2}\left(1-p\right)\right]$

In Equation 1, p represents a probability of being '0' or '1', 0 and 1 are defined according to a switching operation of a unit device, and accordingly, a unit device capable of field-free switching is represented as 1, and a unit device incapable of field-free switching is represented as 0.

Since an ideal p-value is 0.5, an E-value may be 1.

For example, in a first PUF device, since there are 7 unit devices capable of field-free switching out of 16, a p-value becomes 0.438.

Therefore, the E-value of the first PUF device may be 0.989.

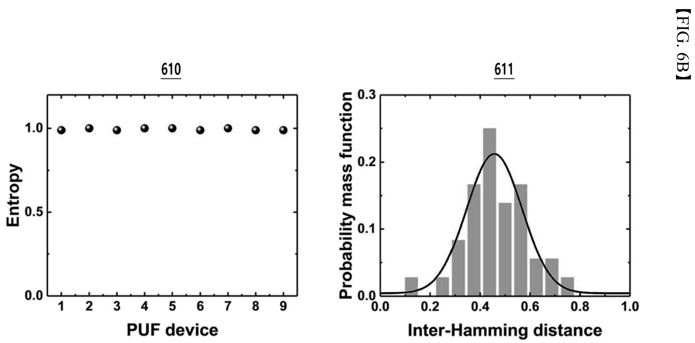

Referring to FIG. 6B, graphs 610 and 611 show a field-free SOT switching characteristic for a total of 9 physically unclonable function devices, and showed an average entropy of 0.994 and an average uniqueness of 0.457±0.011. The ideal values of entropy and uniqueness are 1.0 and 0.5, respectively, which shows that they are experimentally close to the ideal values.

The graph 610 shows the overall entropy values of the PUF devices.

It may be seen that the average value of the entropy of the devices is 0.994, which is close to 1.

Next, the graph 611 determines the uniqueness of the spintronic PUF by quantifying a difference between devices by calculating an inter-Hamming distance (inter-HD).

A Hamming distance (HD) evaluates a number of non-identical bits between two CRPs, and an Inter-HD is determined by calculating the HD for all possible combinations of two PUFs, each consisting of 16 bits.

Therefore, the Inter-HD is calculated by performing 36 (= 9C₂) bit-to-bit comparisons for 9 PUF devices.

The graph 611 shows a probability mass function (PMF) as a function of inter-HD, where the PMF is a value obtained by dividing the number of a specific HD value by a total number of comparisons, 36, and the inter-HD is normalized by a bit length, 16.

An ideal normalized inter-HD, at which uniqueness between two PUF devices is maximized, is 0.5, where half of the bits are different from each other and the other half are the same.

An average normalized inter-HD of 0.457±0.011 and a standard deviation of 0.111±0.013, derived from a Gaussian distribution shown in the graph 611, may be obtained, and a curve may represent a Gaussian fit.

FIGS. 6C to 6J illustrate field-free spin-orbit torque switching measurement values of the spintronic PUF from a second PUF device to a ninth PUF device.

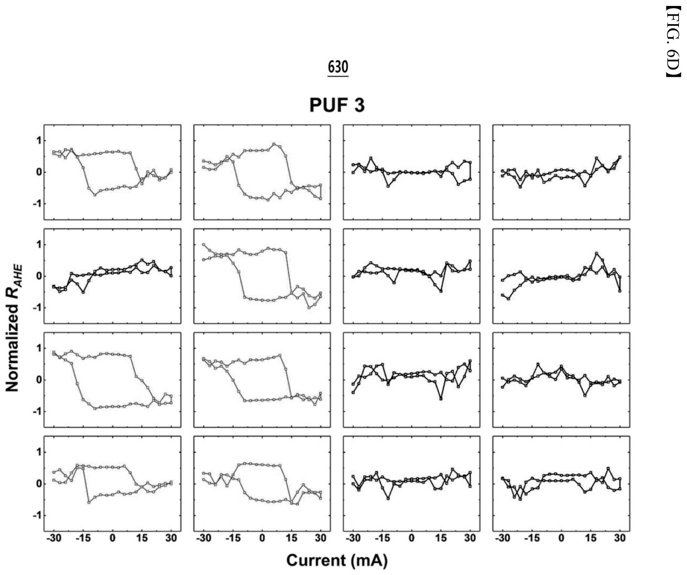

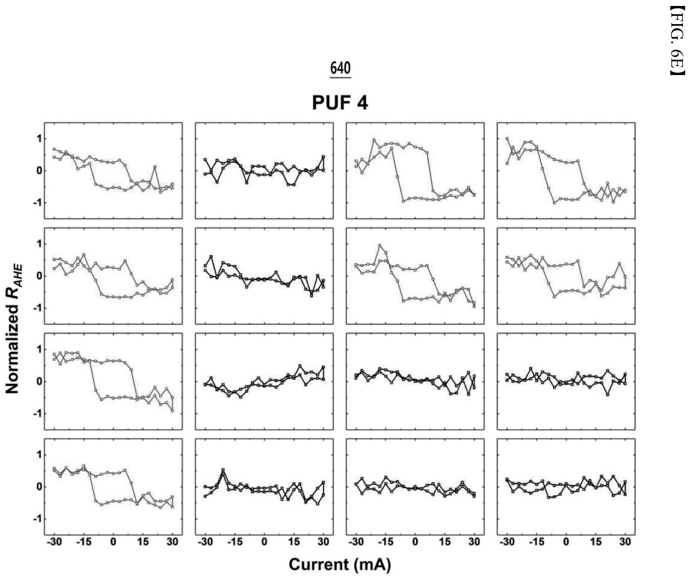

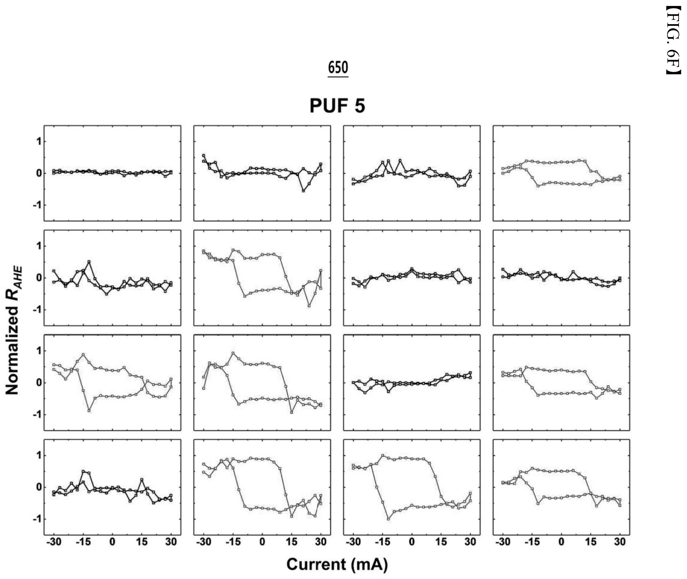

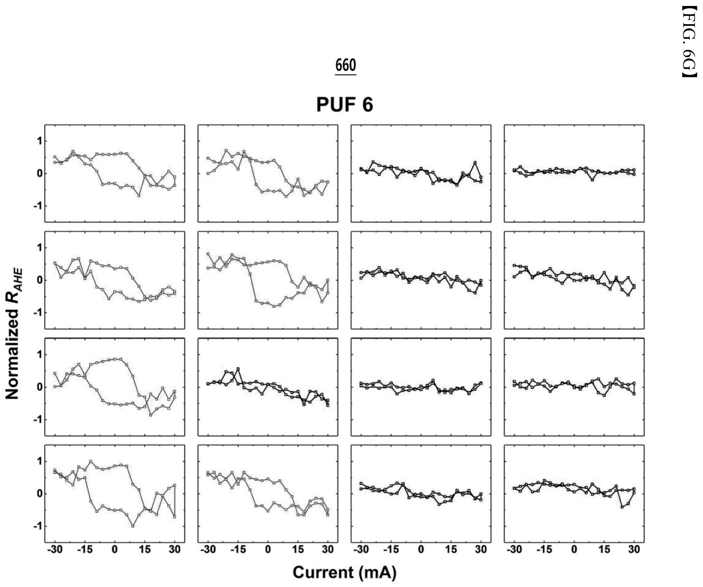

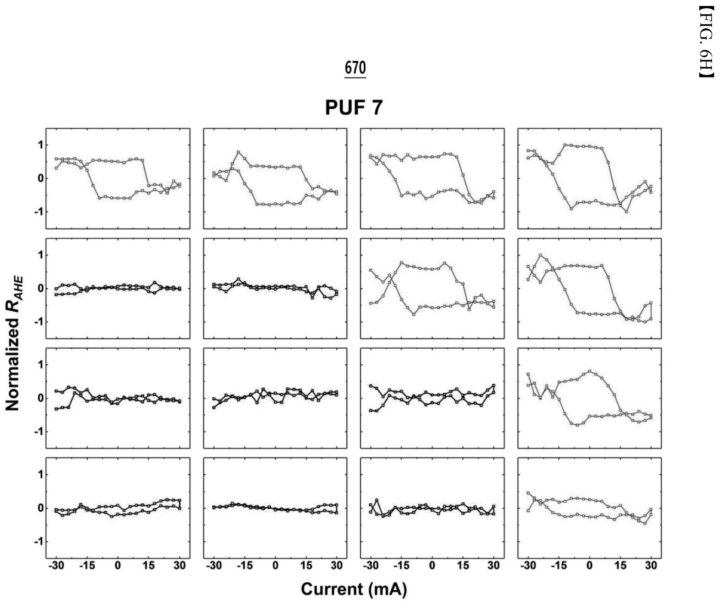

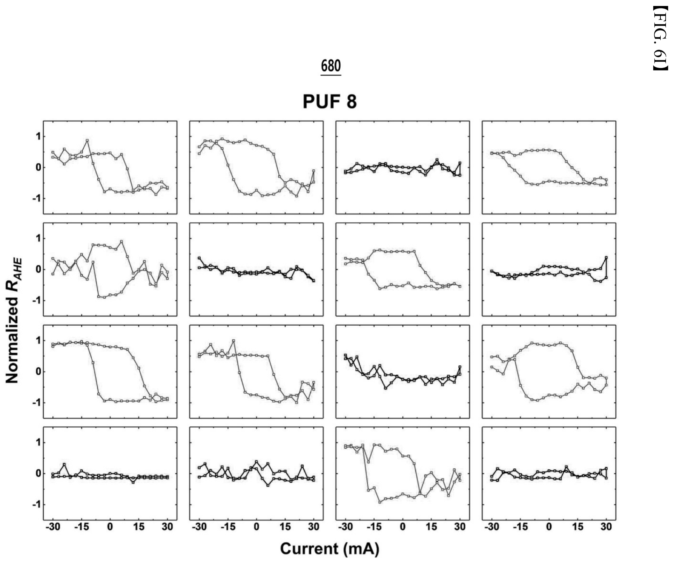

Data 620 of the second PUF device in FIG. 6c, data 630 of the third PUF device in FIG. 6d, data 640 of the fourth PUF device in FIG. 6e, data 650 of the fifth PUF device in FIG. 6f, data 660 of the sixth PUF device in FIG. 6g, data 670 of the seventh PUF device in FIG. 6h, data 680 of the eighth PUF device in FIG. 6i, and data 690 of the ninth PUF device in FIG. 6j may be results of measurements performed in the same manner as a procedure used to obtain data of the first PUF device.

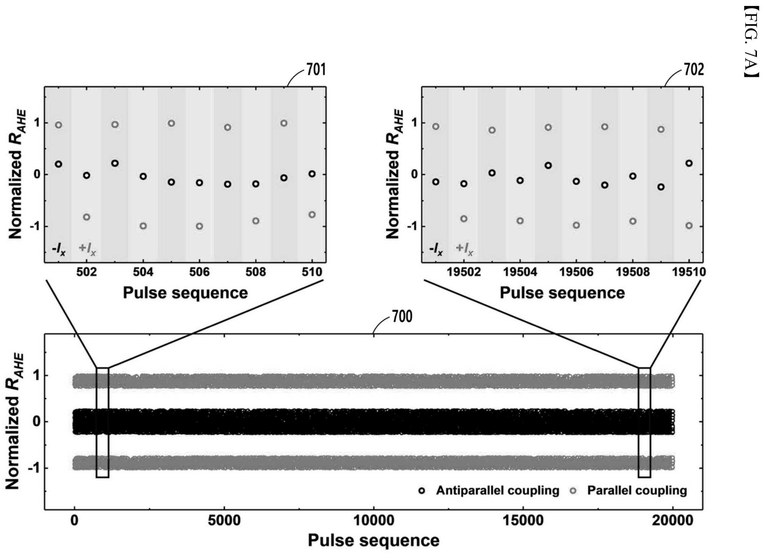

FIGS. 7A to 7C are diagrams for explaining reliability and endurance characteristics by temperature of the physically unclonable function device according to an embodiment of the present disclosure.

FIG. 7A shows reliability characteristic evaluation results, and illustrate results of verifying high reliability and endurance by identifying a field-free SOT switching characteristic 20,000 times at room temperature for control unit devices with Ru thicknesses of 1.0 and 1.7 nm.

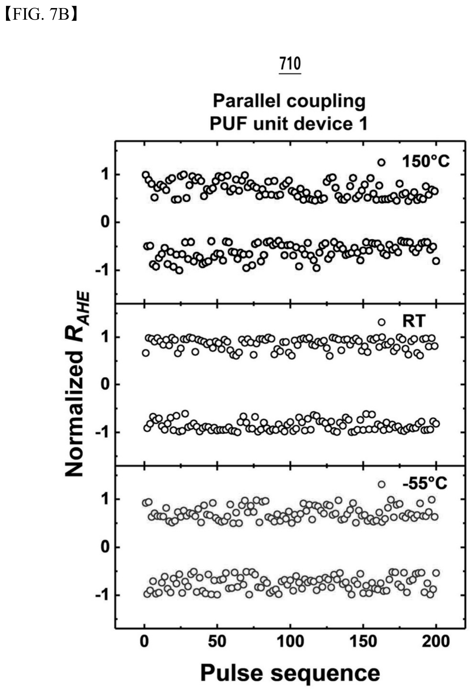

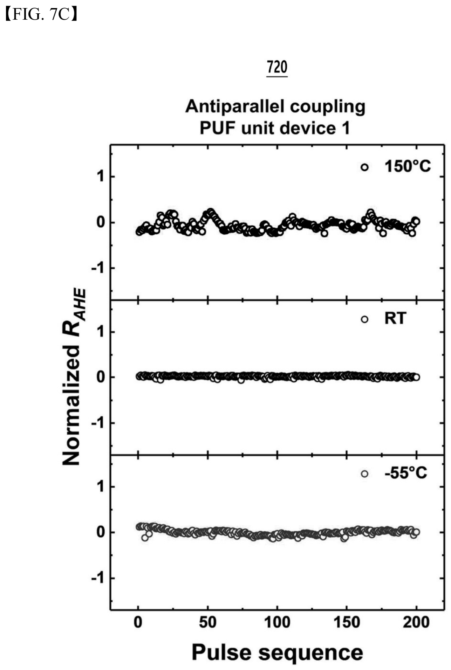

FIGS. 7B and 7C show for antiparallel and parallel PUF unit devices, a field-free spin-orbit characteristic was evaluated 200 times, and it is shown that driving is possible even at -55°C, room temperature, and 150°C.

Referring to FIG. 7A, a start part 701 and end part 702 of data 700 show reliability characteristics of representative control unit devices of parallel and antiparallel RKKY interaction, and it is shown that thicknesses of the Ru non-magnetic intermediate layer of the representative antiparallel and parallel control devices are 1.0 nm and 1.7 nm, respectively, and a measurement is performed at RT.

Referring to FIG. 7B, a graph 710 shows the reliability characteristic of a representative PUF unit device in relation to parallel RKKY interaction, and measurement results at various temperatures for PUF unit device of parallel RKKY interaction.

Referring to FIG. 7C, a graph 720 shows the reliability characteristic of a representative PUF unit device in relation to an antiparallel RKKY interaction, and measurement results at various temperatures for PUF unit device of antiparallel RKKY interaction

It shows a normalized R_{AHE} with respect to the number of current pulses of a representative control unit device after an external magnetic field Hx is applied along a +x direction before a field-free switching measurement.

The control unit device reproduces the same response according to the RKKY interaction without a single error bit for up to 20,000 current pulses, thereby ensuring reliability and high endurance.

It shows measurement values of continuous current pulses applied to a representative PUF unit device having parallel and antiparallel coupling.

The PUF unit device may reproduce a response according to the RKKY interaction, thereby ensuring reliability requirements even under high and low temperature conditions of -55°C and 150°C.

These results show that the RKKY PUF based on the device according to an embodiment of the present disclosure meets requirements for practical applications and provides distinct advantages compared to previously reported spintronic PUFs.

Since it is based on two types of RKKY interaction, it is robust against magnetic modulation, and to modify a CRP, the RKKY interaction needs to be permanently changed, which is highly unlikely.

Since the reliability of the PUF is essential to ensure consistent generation of a cryptographic key, which is crucial for security authentication and data protection, the reliability of the RKKY spintronic PUF may be demonstrated.

In addition, it is important to repeatedly ensure the stable generation of the cryptographic key even under various environmental conditions, and the high reliability of the PUF reduces a need for error correction, thereby minimizing the complexity and overhead of an error correction algorithm.

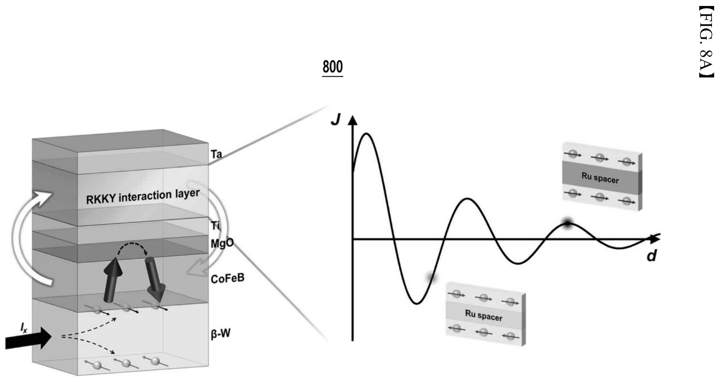

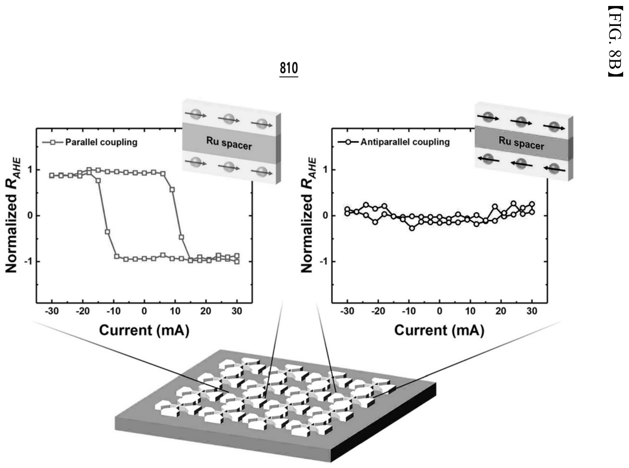

FIGS. 8A and 8B are diagrams for explaining the schematic of a two-state RKKY interaction that oscillates between parallel and antiparallel coupling according to the thickness of the non-magnetic intermediate layer according to an embodiment of the present disclosure.

Referring to FIG. 8A, a schematic diagram 800 shows that a two-state RKKY interaction that oscillates between parallel and an antiparallel coupling occurs according to the thickness of the non-magnetic intermediate layer.

The two-state RKKY interaction results in different stray magnetic field behaviors.

Parallel coupling adds two stray magnetic fields emitted from individual ferromagnetic layers, whereas antiparallel coupling generates a nearly zero stray magnetic field due to two opposing magnetic moments.

The stray magnetic field of the parallel coupling RKKY layer exerts an effective field on a bottommost perpendicularly magnetized CoFeB layer to induce field-free SOT switching.

On the other hand, the stray magnetic field of the antiparallel coupling RKKY layer is nearly zero, so it does not.

Referring to FIG. 8B, a schematic diagram 810 illustrates the field-free SOT switching measurement by an RKKY spintronic PUF device.

A probabilistic RKKY interaction distribution results in an unpredictable switching behavior distribution.

The schematic diagram 800 shows an RKKY interaction behavior of an indirect exchange interaction layer composed of a ferromagnetic (CoFeB)/non-magnetic (Ru)/ferromagnetic (CoFeB) body.

As the thickness of a ruthenium (Ru) layer changes, the RKKY interaction oscillates between a parallel (ferromagnetic) coupling and an antiparallel (antiferromagnetic) coupling.

These two types of interactions may result in two distinct behaviors.

When two ferromagnetic layers are coupled in parallel, stray magnetic fields emitted from the two magnetic layers reinforce each other, resulting in an overall increase in the stray magnetic field.

Conversely, when two ferromagnetic layers are coupled in antiparallel, opposing magnetic moments cancel each other out, resulting in a net magnetic moment close to zero, and thus a stray magnetic field close to zero.

The indirect exchange interaction layer according to an embodiment of the present disclosure controls the field-free spin-orbit torque (SOT) switching of a bottommost perpendicularly magnetized CoFeB layer.

In the case of parallel coupling, a total stray magnetic field emitted from the RKKY interaction layer provides an effective in-plane magnetic field that breaks symmetry, thereby inducing the field-free SOT switching of the bottommost perpendicularly magnetized CoFeB layer.

Previous studies have also demonstrated field-free SOT switching measurements by utilizing the stray magnetic field of a magnetized ferromagnetic layer.

On the other hand, in the case of antiparallel coupling, the nearly zero stray magnetic field is insufficient for deterministic SOT switching.

Since the thickness of the non-magnetic Ru spacer determines a coupling type, it acts as an entropy source in the PUF device.

As shown in the schematic 810, a probabilistic distribution of the RKKY interaction results in a random distribution of two field-free switching types.

A probabilistic Ru spacer thickness distribution between devices may generate a unique and unpredictable pattern of two switching occurrences.

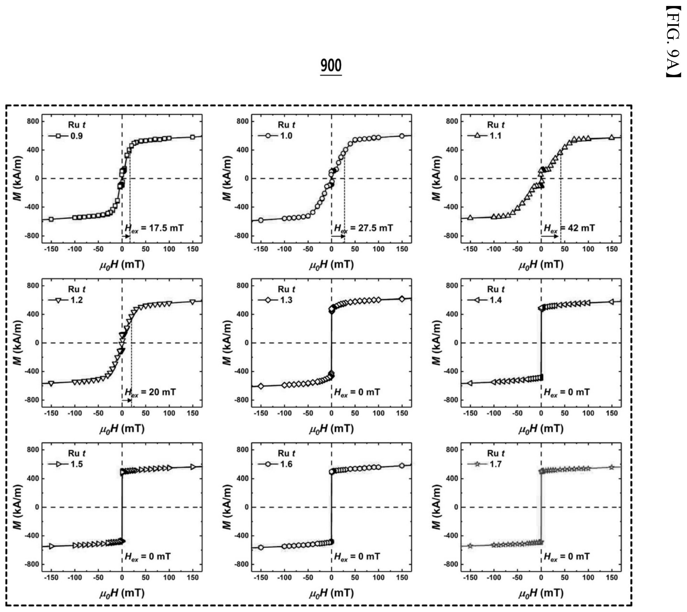

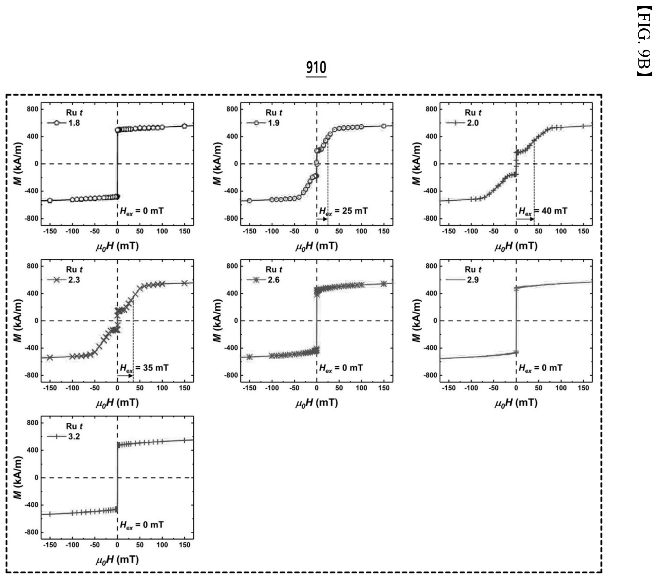

FIGS. 9A and 9B illustrate an exchange field (Hₑₓ) as a function related to the thickness of the non-magnetic intermediate layer according to an embodiment of the present disclosure.

Data 900 and data 910 illustrated in FIGS. 9a and 9b show that according to the RKKY interaction theory, the exchange field H(ex) oscillates as a function of the thickness of the Ru non-magnetic intermediate layer.

It shows a hysteresis loop of parallel and antiparallel RKKY interaction as a function of the thickness of the Ru non-magnetic intermediate layer, along with a definition of Hₑₓ sketched in the data 900 and the data 910.

When an in-plane magnetic field is gradually decreased, a 2.0 nm-thick CoFeB layer is switched first because it has a lower Zeeman energy than a 2.5 nm-thick CoFeB layer, and the exchange field Hₑₓ is the magnitude of the magnetic field when the 2.0 nm-thick CoFeB layer is switched.

The magnitude of the exchange field oscillates according to the thickness of the Ru non-magnetic intermediate layer, which corresponds to the RKKY interaction theory.

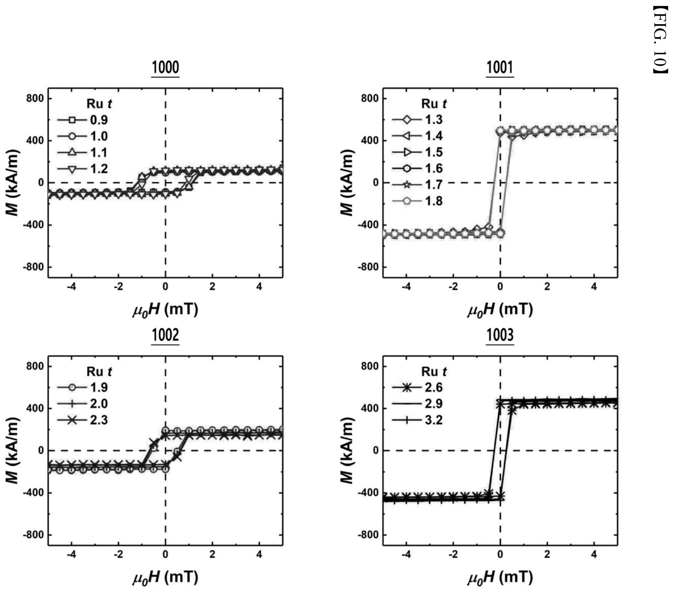

FIG. 10 illustrates the magnetic properties of the physically unclonable function device according to an embodiment of the present disclosure.

Referring to FIG. 10, graphs 1000 to 1003 show the magnetic properties of a β-W 5/CoFeB 0.9/MgO 1/Ti 2/CoFeB 2/RutCoFeB 2.5/Ta 2 (nm) heterostructure.

In-plane hysteresis loops in the graphs 1000 to 1003 show in-plane hysteresis loops according to the thickness of the Ru non-magnetic intermediate layer having the heterostructure.

It shows the magnetic hysteresis loop of the heterostructure in various scale ranges, and shows the magnetic properties of the heterostructure as a function of the thickness of the Ru non-magnetic intermediate layer.

The graph 1000 shows data for the thickness of the non-magnetic intermediate layer from 0.9 nm to 1.2 nm.

The graph 1001 shows data for the thickness of the non-magnetic intermediate layer from 1.3 nm to 1.8 nm.

The graph 1002 shows data for the thickness of the non-magnetic intermediate layer from 1.9 nm to 2.3 nm.

The graph 1003 shows data for the thickness of the non-magnetic intermediate layer from 2.6 nm to 3.2 nm.

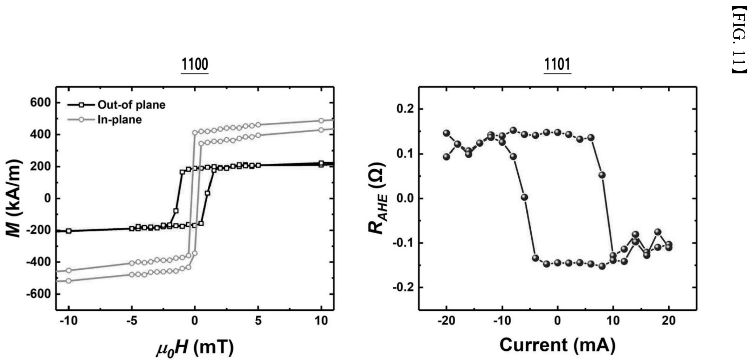

FIG. 11 is a diagram for explaining field-free spin-orbit torque switching due to the stray magnetic field of a magnetic layer with in-plane magnetic anisotropy according to an embodiment of the present disclosure.

Referring to FIG. 11, a graph 1100 shows the magnetic hysteresis loop of the device according to an embodiment of the present disclosure, and a graph 1101 shows stray magnetic field-induced field-free SOT switching.

Stray magnetic field-induced field-free spin-orbit torque switching was demonstrated by using a single in-plane magnetized ferromagnetic layer.

The in-plane magnetized ferromagnetic layer generates a stray magnetic field that may break inversion symmetry.

This leads to a deterministic field-free spin-orbit torque switching of a perpendicularly magnetized ferromagnetic layer.

In the graph 1100, two magnetic layers with thicknesses of 0.9 nm and 2 nm, respectively, have magnetic anisotropy in out-of-plane and in-plane directions, respectively.

It shows field-free spin-orbit torque switching of the structure by the stray magnetic field. An external magnetic field H(x) was applied along a +x direction before the field-free switching measurement. An anomalous Hall resistance value is plotted as a function of a current pulse.

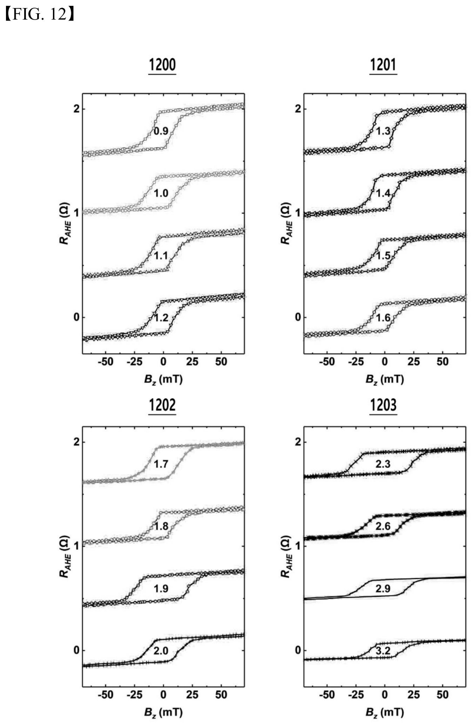

FIG. 12 is a diagram for explaining an anomalous Hall resistance according to the thickness of the non-magnetic intermediate layer in the physically unclonable function device according to an embodiment of the present disclosure.

Referring to FIG. 12, the non-magnetic intermediate layer according to an embodiment of the present disclosure exhibits an anomalous Hall resistance according to its thickness.

Graphs 1200, 1201, 1202, and 1203 show an anomalous Hall resistance R_{AHE} for various ruthenium thicknesses.

It shows that a bottommost CoFeB layer maintained perpendicular magnetic anisotropy for all Ru thicknesses.

This suggests that the non-switching operation of the antiparallel RKKY interaction control device is not due to a degradation of the perpendicular magnetic anisotropy characteristic of the bottommost CoFeB layer.

The graph 1200 illustrates data for a thickness from 0.9 nm to 1.2 nm, the graph 1201 illustrates data for a thickness from 1.3 nm to 1.6 nm, the graph 1202 illustrates data for a thickness from 1.7 nm to 2.0 nm, and the graph 1203 illustrates data for a thickness from 2.3 nm to 3.2 nm.

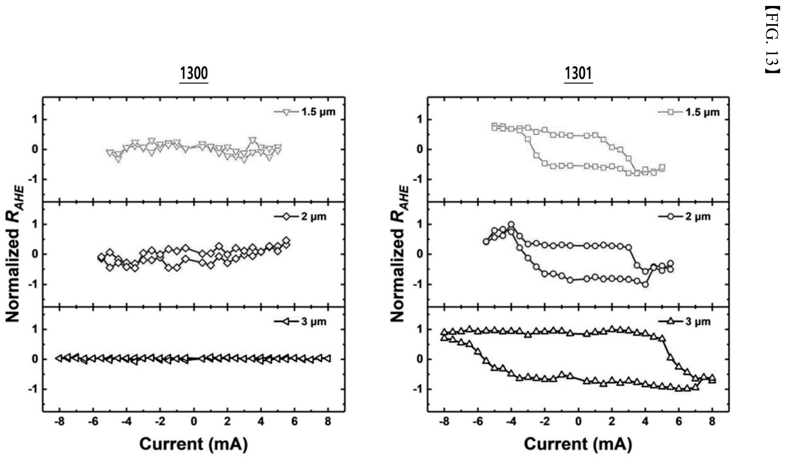

FIG. 13 is a diagram for explaining a field-free switching measurement result when the size of the physically unclonable function device according to an embodiment of the present disclosure is reduced.

Referring to FIG. 13, graphs 1300 and 1301 show a field-free switching operation according to an RKKY interaction for various device sizes, the graph 1300 shows an antiparallel state for various device sizes, and the graph 1301 shows a field-free switching measurement value of a parallel control device.

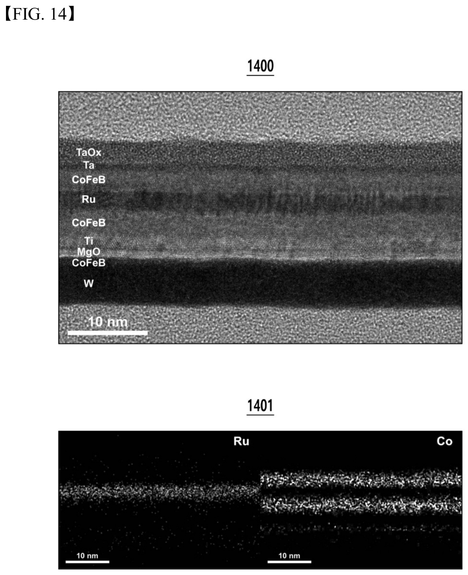

FIG. 14 is a diagram illustrating a microstructural analysis of the physically unclonable function device according to an embodiment of the present disclosure.

Referring to FIG. 14, an image 1400 shows the HR-TEM image of an entire spintronic PUF thin film stack, and an image 1401 shows the STEM-EDS mapping result of Co and Ru atoms.

The stack was prepared by a method mentioned in the sample preparation section of this manuscript, but the RKKY interaction layer was deposited to the thickness of CoFeB 4/Ru t/CoFeB 4.5 (nm) intentionally thickened to enhance visual clarity.

It shows a sharp and continuous interface in the entire film stack even after partially etching the Ru stack, and continuity is very important in the RKKY interaction.

It shows the mapping of Co and Ru atoms taken by scanning transmission electron microscopy (STEM)-energy dispersive spectroscopy (EDS), thereby showing a continuous thin film stack of the RKKY interaction layer.

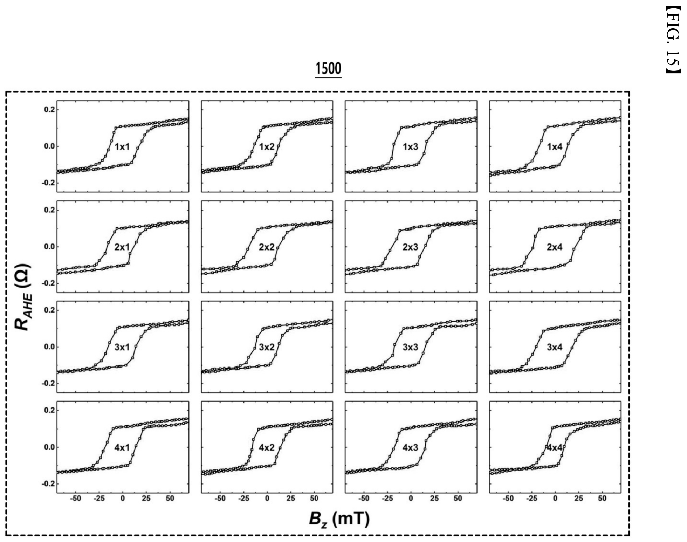

FIG. 15 is a diagram illustrating an anomalous Hall resistance measurement of a 16-bit RKKY spintronic PUF related to the physically unclonable function device according to an embodiment of the present disclosure.

Referring to FIG. 15, data 1500 illustrates R_{AHE} measurement results for individual unit devices by sweeping an external magnetic field perpendicular to a film plane, to confirm that the entire manufacturing process of constructing the RKKY spintronic PUF does not degrade the perpendicular magnetic anisotropy characteristic of the bottommost CoFeB layer.

R_{AHE} values for all 16 unit devices of a representative PUF device may be shown.

A number shown inside a loop indicates a corresponding position of a unit device in a 4x4 array.

From the measurement results, it may be seen that a perpendicularly magnetized bottommost CoFeB layer of all unit devices maintained magnetic anisotropy regardless of its position.

An anomalous Hall resistance (R_{AHE}) measurement value for 16 individual unit devices of a representative 16-bit RKKY spintronic PUF and a number inside a loop indicate the position of the unit device.

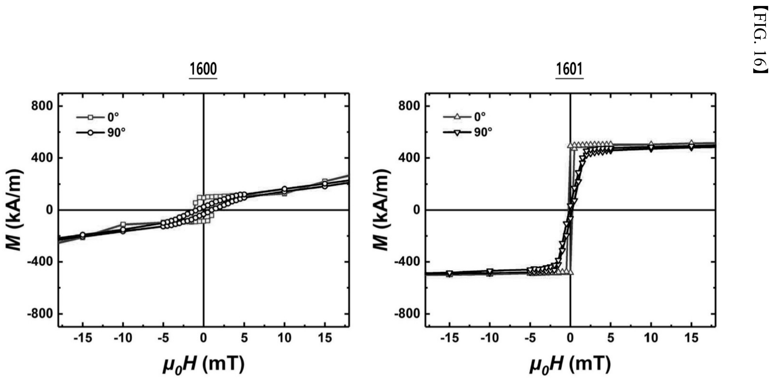

FIG. 16 is a diagram for explaining an in-plane magnetic anisotropy of an RKKY layer related to the physically unclonable function device according to an embodiment of the present disclosure.

Referring to FIG. 16, graphs 1600 and 1601 show an in-plane hysteresis loop of the RKKY layer as a function of a measurement angle.

The angles of 0° and 90° correspond to values measured parallel and perpendicular to an x-axis, respectively.

The results indicate that an easy axis of magnetization of the RKKY layer is along the x-axis and a hard axis is along a y-axis.

The in-plane magnetic anisotropy of the RKKY layer is induced by applying a magnetic field along the x-axis during heat treatment.

The graph 1600 shows the in-plane hysteresis loop of an antiparallel coupling heterostructure, and the graph 1601 shows the in-plane hysteresis loop of a parallel coupling heterostructure.

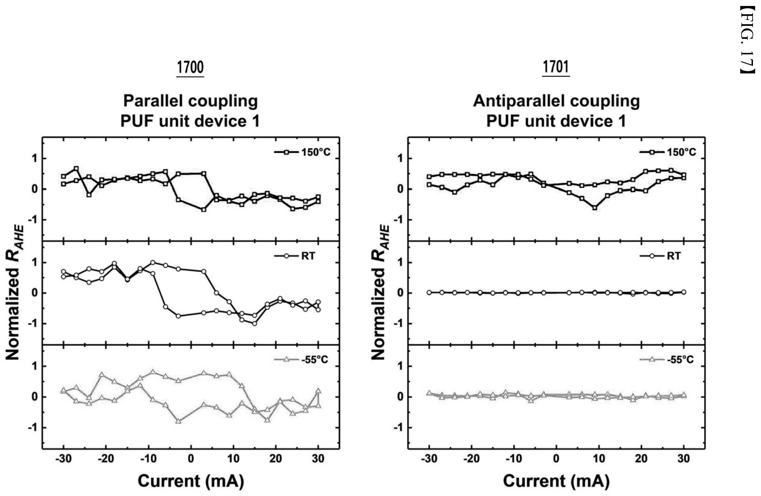

FIG. 17 is a diagram for explaining the SOT switching characteristics of a plurality of physically unclonable function devices at various operating temperatures according to an embodiment of the present disclosure.

Referring to FIG. 17, graphs 1700 and 1701 illustrate the temperature-dependent SOT switching behaviors of parallel and antiparallel coupling unit devices.

The antiparallel coupling unit device becomes relatively unstable at 150°C, but field-free SOT switching is not observed.

The graph 1700 shows a parallel state at various operating temperatures, and the graph 1701 shows a field-free SOT switching measurement of an antiparallel coupling PUF unit device.

Therefore, the present disclosure may implement a PUF that satisfies all conditions of entropy, uniqueness, and reliability, where an output value (response) exhibited by the PUF appears randomly, the PUF has different output patterns for different devices, and the PUF has a unique output value for a specific input value (challenge).

The present disclosure can implement a physically unclonable function device configured to generate a unique cryptographic key through a random indirect exchange interaction caused by uncontrollable process variability in devices where Perpendicular Magnetic Anisotropy (PMA) is maintained and Spin-Orbit Torque (SOT) switching is possible, and a cryptographic key generation apparatus using the physically unclonable function device.

The present invention can implement a cryptographic key generation apparatus configured to generate a unique cryptographic key through a random indirect exchange interaction, as a magnetization direction between a first magnetic layer and a second magnetic layer is determined to be a parallel state or an antiparallel state according to the thickness of a non-magnetic intermediate layer constituting an indirect exchange interaction layer.

The present invention can implement a Physically Unclonable Function (PUF) that satisfies all conditions of entropy, uniqueness, and reliability, where an output value (response) exhibited by the PUF appears randomly, the PUF has different output patterns for different devices, and the PUF has a unique output value for a specific input value (challenge).

The apparatus described above may be implemented as a hardware component, a software component, and/or a combination of hardware components and software components. For example, the apparatus and components described in the embodiments may be achieved using one or more general purpose or special purpose computers, such as, for example, a processor, a controller, an arithmetic logic unit (ALU), a digital signal processor, a microcomputer, a field programmable array (FPA), a programmable logic unit (PLU), a microprocessor, or any other device capable of executing and responding to instructions. The processing device may execute an operating system (OS) and one or more software applications executing on the operating system. In addition, the processing device may access, store, manipulate, process, and generate data in response to execution of the software. For ease of understanding, the processing apparatus may be described as being used singly, but those skilled in the art will recognize that the processing apparatus may include a plurality of processing elements and/or a plurality of types of processing elements. For example, the processing apparatus may include a plurality of processors or one processor and one controller. Other processing configurations, such as a parallel processor, are also possible.

The software may include computer programs, code, instructions, or a combination of one or more of the foregoing, configure the processing apparatus to operate as desired, or command the processing apparatus, either independently or collectively. In order to be interpreted by a processing device or to provide instructions or data to a processing device, the software and/or data may be embodied permanently or temporarily in any type of machine, a component, a physical device, a virtual device, a computer storage medium or device, or a transmission signal wave. The software may be distributed over a networked computer system and stored or executed in a distributed manner. The software and data may be stored in one or more computer-readable recording media.

Although the present disclosure has been described with reference to limited embodiments and drawings, it should be understood by those skilled in the art that various changes and modifications may be made therein. For example, the described techniques may be performed in a different order than the described methods, and/or components of the described systems, structures, devices, circuits, etc., may be combined in a manner that is different from the described method, or appropriate results may be achieved even if replaced by other components or equivalents.

Therefore, other embodiments, other examples, and equivalents to the claims are within the scope of the following claims.

## Claims

1. A physically unclonable function device, comprising: a spin-torque generating layer; a magnetic free layer; a tunnel barrier layer; a spacer layer; and an indirect exchange interaction layer,
wherein the spin-torque generating layer generates a Spin-Orbit Torque (SOT) when a current flows in an in-plane direction,
the magnetic free layer has Perpendicular Magnetic Anisotropy (PMA), and
the indirect exchange interaction layer comprises a first magnetic layer, a non-magnetic intermediate layer, and a second magnetic layer, wherein a magnetization direction between the first magnetic layer and the second magnetic layer is determined to be a parallel or antiparallel state according to a thickness of the non-magnetic intermediate layer, and when the magnetization direction of the indirect exchange interaction layer is the antiparallel state, stray magnetic fields of the first and second magnetic layers cancel each other out so that switching of the magnetic free layer does not occur, and when the magnetization direction of the indirect exchange interaction layer is the parallel state, the stray magnetic fields reinforce each other so that switching of the magnetic free layer occurs.

2. The physically unclonable function device according to claim 1, wherein for an input value applied to the spin-torque generating layer, an output value which is determined by a field-free SOT switching characteristic based on switching of the magnetic free layer determined according to the magnetization direction of the indirect exchange interaction layer is generated.

3. The physically unclonable function device according to claim 1 or 2, wherein the indirect exchange interaction layer has an indirect exchange interaction characteristic due to process variability based on a change in a thickness of the non-magnetic intermediate layer, and randomly determines an output value according to the indirect exchange interaction characteristic.

4. The physically unclonable function device according to one of claims 1 to 3, wherein the non-magnetic intermediate layer has a thickness of 0.9 nm to 3.2 nm.

5. The physically unclonable function device according to one of claims 1 to 4, wherein the magnetization direction of the indirect exchange interaction layer is determined to be the antiparallel state when the thickness of the non-magnetic intermediate layer is from 0.9 nm to 1.2 nm, and is determined to be the parallel state by oscillating from the antiparallel state to the parallel state when the thickness of the non-magnetic intermediate layer increases from 1.3 nm to 1.8 nm.

6. The physically unclonable function device according to claim 5, wherein the magnetization direction of the indirect exchange interaction layer is determined to be the antiparallel state by oscillating from the parallel state to the antiparallel state when the thickness of the non-magnetic intermediate layer is from 1.9 nm to 2.3 nm, and is determined to be the parallel state by oscillating from the antiparallel state to the parallel state when it is from 2.6 nm to 3.2 nm.

7. The physically unclonable function device according to one of claims 1 to 6, wherein the magnetization direction of the indirect exchange interaction layer is determined by Ruderman-Kittel-Kasuya-Yosida (RKKY) interaction between the first magnetic layer and the second magnetic layer.

8. The physically unclonable function device according to one of claims 1 to 7, wherein the first magnetic layer and the second magnetic layer are formed of CoFeB, and the non-magnetic intermediate layer is formed of Ru.

9. A cryptographic key generation apparatus, comprising: an array in which a plurality of physically unclonable function devices are arranged,
wherein one of the plural physically unclonable function devices comprises a spin-torque generating layer; a magnetic free layer; a tunnel barrier layer; a spacer layer; and an indirect exchange interaction layer,
wherein the spin-torque generating layer generates a Spin-Orbit Torque (SOT) when a current flows in an in-plane direction,
the magnetic free layer has Perpendicular Magnetic Anisotropy (PMA), and
the indirect exchange interaction layer comprises a first magnetic layer, a non-magnetic intermediate layer, and a second magnetic layer, wherein a magnetization direction between the first magnetic layer and the second magnetic layer is determined to be a parallel or antiparallel state according to a thickness of the non-magnetic intermediate layer, and when the magnetization direction of the indirect exchange interaction layer is the antiparallel state, stray magnetic fields of the first and second magnetic layers cancel each other out so that switching of the magnetic free layer does not occur, and when the magnetization direction of the indirect exchange interaction layer is the parallel state, the stray magnetic fields reinforce each other so that switching of the magnetic free layer occurs, and a cryptographic key is generated according to random output values based on different indirect exchange interaction characteristics due to process variability based on a change in a thickness of the non-magnetic intermediate layer in the array.

10. The cryptographic key generation apparatus according to claim 9, wherein one of the plural physically unclonable function devices has an indirect exchange interaction characteristic due to process variability based on a change in a thickness of the non-magnetic intermediate layer in the indirect exchange interaction layer, and, for an input value, generates an output value randomly determined according to the indirect exchange interaction characteristic.

11. The cryptographic key generation apparatus according to claim 9 or 10, wherein the non-magnetic intermediate layer has a thickness of 0.9 nm to 3.2 nm.

12. The cryptographic key generation apparatus according to one of claims 9 to 11, wherein the magnetization direction of the indirect exchange interaction layer is determined to be the antiparallel state when the thickness of the non-magnetic intermediate layer is from 0.9 nm to 1.2 nm, and is determined to be the parallel state by oscillating from the antiparallel state to the parallel state when the thickness of the non-magnetic intermediate layer increases from 1.3 nm to 1.8 nm.

13. The cryptographic key generation apparatus according to claim 12, wherein the magnetization direction of the indirect exchange interaction layer is determined to be the antiparallel state by oscillating from the parallel state to the antiparallel state when the thickness of the non-magnetic intermediate layer is from 1.9 nm to 2.3 nm, and is determined to be the parallel state by oscillating from the antiparallel state to the parallel state when it is from 2.6 nm to 3.2 nm.

14. The cryptographic key generation apparatus according to one of claims 9 to 13, wherein one of the plural physically unclonable function devices performs switching by the generated SOT without an external magnetic field.

15. The cryptographic key generation apparatus according to one of claims 9 to 14, wherein, in the array where the plural physically unclonable function devices are arranged, the plural physically unclonable function devices are arranged in preset rows and columns, such that for each of the plurality of physically unclonable function devices, a field-free SOT characteristic is determined as a parallel or antiparallel state is determined according to a random indirect exchange interaction, an output value is output as the field-free SOT characteristic, and a cryptographic key is generated using the outputted output value.
